# EUROPÄISCHE PATENTSCHRIFT

(11) **EP 4 448 982 B1**
(45) Veröffentlichungstag und Bekanntmachung des Hinweises auf die Patenterteilung: **02.09.2026**
(21) Anmeldenummer: 22801019.5
(22) Anmeldetag: 25.10.2022
(51) Int. Cl.: F16D 41/12, F16D 11/14, F16D 41/14, F16D 41/04

(54) **KUPPLUNGSANORDNUNG MIT SCHALTBAREM FREILAUF SOWIE ANTRIEBSSTRANG MIT DER KUPPLUNGSANORDNUNG**
CLUTCH ASSEMBLY COMPRISING SWITCHABLE FREEWHEEL AND DRIVETRAIN COMPRISING THE CLUTCH ASSEMBLY
ENSEMBLE EMBRAYAGE COMPRENANT UNE ROUE LIBRE COMMUTABLE ET CHAÎNE CINÉMATIQUE COMPRENANT L'ENSEMBLE EMBRAYAGE

(30) Priorität: 15.12.2021 DE 102021133208
(43) Veröffentlichungstag der Anmeldung: 23.10.2024
(73) Patentinhaber: Schaeffler Technologies AG & Co. KG, 91074 Herzogenaurach (DE)
(72) Erfinder: SLEZÁK, Luboslav, 90605 Podbranc (SK); OREL, Erik, 90901 Skalica (SK)
(74) Vertreter: Schaeffler Technologies
(86) Internationale Anmeldenummer: PCT/DE2022/100788
(87) Internationale Veröffentlichungsnummer: WO 2023/109999

(56) Entgegenhaltungen:
- WO-A1-2022/260873
- DE-A1- 102017 128 198
- DE-C- 888 340

## Beschreibung

Die Erfindung betrifft eine Kupplungsanordnung mit den Merkmalen des Oberbegriffs des Anspruchs 1. Ferner betrifft die Erfindung einen Antriebsstrang mit der Kupplungsanordnung.

Es sind schaltbare Freilaufkupplungen bekannt, welche zum Kuppeln von drehbaren Bauteilen, wie z.B. Wellen, eingesetzt werden. Die Kupplungen können dabei mit einem steuerbaren Freilauf zur selektiven Drehmomentübertragung zwischen den drehmomentübertragenden Bauteilen ausgestattet sein. Die Freilaufkupplungen können meist mit einem elektrischen, mechanischen oder hydraulischen Antrieb gesteuert werden.

Die Druckschrift DE 10 2018 101 148 A1 beschreibt eine schaltbare Kupplung, welche einen äußeren Ring, einen inneren Ring, einen Rollenkäfig, eine Mehrzahl von Rollen und eine Mitnehmerplatte aufweist. Der äußere Ring weist eine Mehrzahl von rampenförmigen Flächen auf. Der Rollenkäfig ist radial zwischen dem äußeren Ring, und dem inneren Ring angeordnet. Die Rollen sind durch den Rollenkäfig geführt. Die Mitnehmerplatte ist drehfest an dem inneren Ring befestigt und kann mit dem Rollenkäfig in Eingriff kommen, um die Rollen in Bezug auf den äußeren Ring zu drehen. In einer beispielhaften Ausführung weist die schaltbare Kupplung eine mit dem äußeren Ring in Eingriff stehende Feder, welche dazu dient, den Rollenkäfig in eine erste Drehrichtung relativ zum äußeren Ring vorzuspannen. In einer beispielhaften Ausführung weist die schaltbare Kupplung einen Elektromagneten auf, der mit der Mitnehmerplatte und dem Rollenkäfig in Eingriff kommt, und/oder eine Schraubenfeder-Einheit zum Lösen der Mitnehmerplatte und des Rollenkäfigs.

DE 888 340 C und DE 10 2017 128198 A1 beschreiben weitere Kupplungsanordnungen aus dem Stand der Technik.

Der Erfindung liegt die Aufgabe zugrunde, eine Kupplungsanordnung vorzuschlagen, welche sich durch eine lastschaltbare Betätigung sowie einen robusten Aufbau auszeichnet. Ferner ist es Aufgabe der Erfindung einen Antriebstrang mit der Kupplungsanordnung vorzuschlagen.

Diese Aufgabe wird durch eine Kupplungsanordnung mit den Merkmalen des Anspruchs 1 sowie einen Antriebsstrang mit den Merkmalen des Anspruchs 10 gelöst. Bevorzugte und/oder vorteilhafte Ausführungen der Erfindung geben sich aus den Unteransprüchen, der nachfolgenden Beschreibung sowie den beigefügten Figuren.

Gegenstand der Erfindung ist eine Kupplungsanordnung, welche insbesondere für einen Antriebsstrang eines Fahrzeugs ausgebildet und/oder geeignet ist. Die Kupplungsanordnung dient insbesondere zum zu- bzw. abschalten einer Antriebsachse des Fahrzeugs. Vorzugsweise ist Kupplungsanordnung als eine Klauenkupplung, vorzugsweise als eine Abschaltkupplung, ausgebildet.

Die Kupplungsanordnung weist einen ersten Kupplungspartner und einen zweiten Kupplungspartner auf. Insbesondere sind die Kupplungspartner um eine gemeinsame Hauptdrehachse verdrehbar. Vorzugsweise ist der erste Kupplungspartner drehmomentübertragend mit einem ersten rotierenden Bauteil, z.B. einer ersten Welle, verbindbar und/oder verbunden und der zweite Kupplungspartner drehmomentübertragend mit einem zweiten rotierenden Bauteil, z.B. einer zweiten Welle, verbindbar und/oder verbunden. Die beiden Kupplungspartner sind in Bezug auf die Hauptdrehachse vorzugsweise koaxial und/oder konzentrisch zueinander angeordnet. Beispielsweise ist der erste Kupplungspartner als eine Nabe und der zweite Kupplungspartner als ein Kupplungskörper, im Speziellen ein Ratschenring, ausgebildet.

Die Kupplungsanordnung weist einen schaltbaren Freilauf auf. Der Freilauf ist zwischen dem ersten und dem zweiten Kupplungspartner angeordnet, um die beiden Kupplungspartner drehrichtungsabhängig miteinander zu koppeln. Insbesondere ist der Freilauf mechanisch zu- oder abschaltbar. Dabei überträgt der Freilauf in einem zugeschalteten Zustand abhängig von der Drehrichtung zwischen den beiden Kupplungspartnern ein Drehmoment. Im abgeschalteten Zustand sind der erste und der zweite Kupplungspartner unabhängig vom Freilauf wahlweise miteinander gekoppelt oder voneinander entkoppelt.

Der Freilauf weist eine Mehrzahl von federbelasteten Sperrkörpern auf, welche zumindest in Umfangsrichtung an dem einen Kupplungspartner festgelegt sind und mit einer an dem anderen Kupplungspartner angeordneten rampenförmigen Sperrkontur in Abhängigkeit der Drehrichtung formschlüssig zusammenwirken. Im zugeschalteten Zustand des Freilaufs greifen die Sperrkörper in einer festgelegten Drehrichtung vorzugsweise formschlüssig in die Sperrkontur ein und gleiten in einer der Drehrichtung entgegen gerichteten Gegendrehrichtung an der Sperrkontur ab. Die Sperrkontur ist vorzugsweise durch eine umlaufende Zahnrampengeometrie, insbesondere eine Sägezahnrampe, gebildet. Die Sperrkörper sind vorzugsweise als axial bewegbare Sperrklinken ausgebildet.

Im Rahmen der Erfindung wird vorgeschlagen, dass die Kupplungsanordnung eine koaxial zu den beiden Kupplungspartnern angeordnete Schiebemuffe aufweist, welche zur Steuerung des Freilaufs ausgebildet und/oder geeignet ist. Die Schiebemuffe ist vorzugsweise in axialer Richtung in Bezug auf die Drehachse relativ zu den beiden Kupplungspartnern verschiebbar und in Umfangsrichtung drehfest mit dem ersten und/oder zweiten Kupplungspartner verbunden bzw. verbindbar. Insbesondere sind die beiden Kupplungspartner radial innerhalb der Schiebemuffe aufgenommen bzw. aufnehmbar. Optional kann die Schiebemuffe an ihrem Außenumfang eine in Umlaufrichtung verlaufende Nut zur Anbindung eines Betätigungsaktuators aufweist. Insbesondere dient die Nut zur Aufnahme einer Schaltgabel, insbesondere zur Aufnahme eines Gleitsteins. Die Schiebemuffe ist in axialer Richtung in Bezug auf die Hauptdrehachse zwischen einer Sperrstellung, einer Freilaufstellung und einer Neutralstellung verschiebbar. Insbesondere ist die Schiebemuffe in einer axialen Richtung bezogen auf die Hauptdrehachse von der Sperrstellung in die Freilaufstellung und anschließend in die Neutralstellung und in umgekehrter Reihenfolge in einer axialen Gegenrichtung verschiebbar.

In der Sperrstellung sind die beiden Kupplungspartner in einer Drehrichtung und in einer Gegendrehrichtung über die Schiebemuffe drehfest miteinander verbunden.

Insbesondere steht die Schiebemuffe in der Sperrstellung mit dem ersten und dem zweiten Kupplungspartner in Umfangsrichtung formschlüssig in Eingriff, um die beiden Kupplungspartner bei einer Rotation in der Drehrichtung und der Gegendrehrichtung drehfest miteinander zu verbinden. Durch axiales Verschieben der Schiebemuffe in die Freilaufstellung, wird die drehfeste Verbindung zwischen den beiden Kupplungspartnern zumindest teilweise aufgehoben.

In der Freilaufstellung sind die beiden Kupplungspartner über den Freilauf in genau einer Drehrichtung drehfest miteinander verbunden. Insbesondere stehen die Sperrkörper in der Freilaufstellung mit dem ersten und dem zweiten Kupplungspartner in der Drehrichtung formschlüssig in Eingriff, um die beiden Kupplungspartner bei einer Rotation in der Drehrichtung drehfest miteinander zu verbinden. Wohingegen die beiden Kupplungspartner bei einer Rotation in einer Gegendrehrichtung relativ zueinander verdrehbar sind bzw. einer der beiden Kupplungspartner stationär verbleibt. Durch axiales Verschieben der Schiebemuffe in die Neutralstellung wird der Freilauf abgeschaltet.

In der Neutralstellung sind die Sperrkörper durch die Schiebemuffe außer Eingriff zu der Sperrkontur gehalten sind, sodass die beiden Kupplungspartner in der Drehrichtung und in der Gegendrehrichtung relativ zueinander verdrehbar sind. Insbesondere ist die Schiebemuffe mit den Sperrkörpern derart bewegungsgekoppelt, sodass diese bei einer axialen Verschiebung der Schiebemuffe von der Sperrkontur wegbewegt werden. Durch axiales Verschieben der Schiebemuffe in die Neutralstellung, wird die drehfeste Verbindung zwischen den beiden Kupplungspartnern vollständig aufgehoben.

Der Vorteil der Erfindung besteht insbesondere darin, dass eine Kupplungsanordnung vorgeschlagen wird, welche sich aufgrund der axialen Verschiebung der Schaltmuffe durch eine einfache, insbesondere unter Last schaltbare Betätigung auszeichnet. Durch die Betätigung des Freilaufs über die Schiebemuffe kann zudem auf einen zusätzlichen Betätigungsaktuator für den Freilauf verzichtet werden, sodass die Kupplungsanordnung mit deutlich weniger Bauteilen auskommt und zugleich besonders kostengünstig ausgestaltet werden kann. Ein weiterer Vorteil besteht zudem darin, dass die Kupplungsanordnung besonders robust ausgestaltet werden kann und zur Übertragung hoher Momente geeignet ist.

In einer konkreten Ausgestaltung ist vorgesehen, dass der Freilauf in axialer Richtung in Bezug auf eine Hauptdrehachse zwischen den beiden Kupplungspartnern angeordnet ist. Hierzu weist der erste Kupplungspartner an einer axialen Stirnseite eine Mehrzahl an Aufnahmetaschen zur Aufnahme der Sperrkörper und der zweite Kupplungspartner an einer den Sperrkörpern gegenüberliegenden axialen Stirnseite die Sperrkontur auf. Insbesondere sind die Sperrkörper innerhalb der Aufnahmetaschen versenkbar aufgenommen. Die Aufnahmetaschen bilden vorzugsweise eine Negativkontur der Sperrkörper, sodass die Sperrkörper zumindest in Umfangsrichtung formschlüssig und/oder passgenau in der jeweiligen Aufnahmetasche aufgenommen sind. In axialer Richtung sind die Sperrkörper bewegbar in der jeweiligen Aufnahmetasche geführt. Bevorzugt ist jeder der Sperrkörper über jeweils eine Feder in der zugehörigen Aufnahmetasche abgestützt, sodass die Sperrkörper in axialer Richtung in Bezug auf die Hauptdrehachse bzw. in Richtung der Sperrkontur mit einer Federkraft beaufschlagt werden. Im zugeschalteten Zustand sind die Sperrkörper teilweise aus der jeweiligen Aufnahmetasche ausgesteuert, sodass diese einerseits mit der Sperrkontur und andererseits mit der Aufnahmetasche drehmomentübertragend in Eingriff stehen. Im abgeschalteten Zustand sind die Sperrkörper vollständig oder größtenteils in die jeweilige Aufnahmetasche eingesteuert, sodass diese außer Eingriff bzw. beabstandet zu der Sperrkontur angeordnet sind. Durch die axiale Anordnung des Freilaufs zwischen den beiden Kupplungspartner, können die Sperrköper in einfacher Weise durch die axiale Verschiebung der Schiebemuffe in die Aufnahmetaschen ein- bzw. ausgesteuert werden. Somit kann auf eine aufwändige Mechanik zur Übersetzung der Bewegung der Schiebemuffe auf die Sperrkörper verzichtet werden.

In einer weiteren Ausgestaltung ist vorgesehen, dass der Freilauf einen mit der Schiebemuffe bewegungsgekoppelten Steuerring aufweist. Der Steuerring liegt in einer axialen Richtung in Bezug auf die Hauptdrehachse entgegen einer Federkraft an den Sperrkörpern an, um eine axiale Bewegung der Schiebemuffe auf die Sperrkörper zu übertragen. Insbesondere ist die Schiebemuffe zumindest bei einer Bewegung zwischen der Neutralstellung und der Freilaufstellung mit dem Steuerring bewegungsgekoppelt, um den Freilauf zu- oder abzuschalten. Insbesondere sind die Sperrkörper auf einem gemeinsamen Teilkreis in Umfangsrichtung verteilt und/oder beabstandet zueinander angeordnet. Der Steuerring liegt dabei abschnittsweise an jedem der Sperrkörper an, um alle Sperrkörper bei einer Verschiebung der Schiebmuffe von der Freilaufstellung in die Neutralstellung zeitgleich in die jeweils zugehörige Aufnahmetasche einzusteuern. Vorzugsweise weist der Steuerring einen Innenring und einen Außenring auf, welche radial voneinander beabstandet und in Bezug auf die Hauptdrehachse koaxial und/oder konzentrische zueinander angeordnet sind. Der Innen- und Außenring sind vorzugsweise über mehrere in Umfangsrichtung verteilte Verbindungstege miteinander verbunden. Insbesondere durchgreifen die Sperrkörper und/oder die Sperrkontur den Steuerring in Freilaufstellung zwischen Innen- und Außenring. Die Sperrkörper weisen jeweils einen Grundköperabschnitt mit mindestens einem äußeren, radial nach außen gerichteten Anlageabschnitt zur Anlage des Außenrings sowie mindestens einem inneren, radial nach innen gerichteten Anlageabschnitt zur Anlage des Innenrings auf. Der Grundkörperabschnitt ist vorzugsweise zwischen dem Innen- und dem Außenring angeordnet, wobei die Sperrköper in der Freilaufstellung mit dem Grundköperabschnitt in der Drehrichtung mit der Sperrkontur in Eingriff stehen. Durch den Steuerring können die Sperrkörper in einfacher Weise bei einer Bewegung der Schiebemuffe gemeinsam ein- bzw. ausgesteuert werden, wodurch der Schaltvorgang weiter verbessert wird.

**In** einer Konkretisierung ist vorgesehen, dass der Steuerring ein oder mehrere radial nach außen gerichtete Steuerstäbe aufweist, welche jeweils axial in einer in dem ersten Kupplungspartner ausgebildeten Steuerkulisse geführt sind. Die Schiebemuffe ist dabei über den Steuerstab mit dem Steuerring bewegungskoppelt. Der Freilauf ist vorzugsweise radial innerhalb des ersten Kupplungspartners aufgenommen, wobei der mindestens eine Steuerstab die Steuerkulisse in radialer Richtung nach außen hin bzw. in Richtung der Schiebemuffe durchgreift. Vorzugsweise sind die mehreren Steuerstäbe in Umfangsrichtung gleichmäßig verteilt und/oder beabstandet voneinander angeordnet. Die Steuerkulisse ist als ein in axialer Richtung in Bezug auf die Hauptdrehachse erstreckender Ausschnitt, Schlitz, Aussparung, Durchbruch oder dergleichen ausgebildet. Insbesondere ist der Steuerring über den mindestens einen Steuerstab in axialer Richtung in der zugehörigen Steuerkulisse geradgeführt und in Umfangsrichtung drehfest gehalten. Es wird somit eine Kupplungsanordnung vorgeschlagen, welche sich durch einen besonders kompakten Aufbau auszeichnet. Insbesondere kann der Freilauf hierzu in den ersten Kupplungspartner integriert werden, wobei der Freilauf über die Steuerstäbe in einfacher Weise durch die Schiebemuffe angesteuert werden.

In einer weiteren konkreten Umsetzung ist vorgesehen, dass die Schiebemuffe an ihrem Innenumfang ein oder mehrere Steuerkonturen aufweist. Die Steuerkontur ist in der axialen Richtung, insbesondere in Richtung der Neutralstellung, an dem jeweiligen Steuerstab abgestützt und/oder abstützbar, um den Steuerring bei einer Bewegung, insbesondere einer axialen Verschiebung, der Schiebemuffe von der Freilaufstellung in die Neutralstell entgegen der Federkraft in der axialen Richtung mitzunehmen. Insbesondere weist die Schiebemuffe je Steuerstab jeweils eine zugehörige Steuerkontur auf. Die Steuerkontur kann als ein radial nach innen gerichteter Steg, Nase oder Zahn ausgebildet sind. Optional kann die Steuerkontur in der Sperrstellung mit dem zweiten Kupplungspartner in Eingriff stehen, um die beiden Kupplungspartner drehmomentübertragend miteinander zu verbinden. Es wird somit eine Schiebemuffe vorgeschlagen, welche in einfacher Weise über eine Formschlussverbindung mit dem Steuerring bewegungsgekoppelt ist.

In einer Weiterbildung ist vorgesehen, dass die Kupplungsanordnung einen Sicherungsring aufweist. Der erste Kupplungspartner weist eine umlaufende Aufnahmenut und die Schiebemuffe eine umlaufende Haltenut auf, wobei der Sicherungsring in der Aufnahmenut montiert ist und in der Neutralstellung abschnittsweise in die Haltenut eingreift, um die Schiebemuffe in der Neutralstellung axial an dem ersten Kupplungskörper zu sichern. Insbesondere hat der Sicherungsring die Funktion, die Schiebemuffe in der Neutralstellung gegen eine axiale Verschiebung aufgrund der auf den Steuerring wirkenden Federkräfte zu sichern. Optional dient der Sicherungsring dazu die gesamte Baueinheit, insbesondere zumindest den Freilauf, nach dem Zusammenbau gegen Verlieren zu sichern. Vorzugsweise ist der Sicherungsring bei einer Beaufschlagung der Schiebemuffe mit einer axialen Betätigungskraft in die Aufnahmenut verformbar, um die Schiebemuffe in Richtung der Freilaufstellung freizugeben. Besonders bevorzugt ist der Sicherungsring bei einer axialen Verschiebung in die Freilaufstellung und/oder die Sperrstellung radial vorgespannt, wobei der Sicherungsring bei Erreichen der Neutralstellung selbststätig in die Haltenut einrastet. Der Sicherungsring ist insbesondere als ein geschlitzter Sprengring ausgebildet. Ein weiterer Vorteil besteht zudem darin, dass durch die axiale Sicherung der Schiebemuffe, die Energieversorgung des Betätigungsaktors in der Neutralstellung unterbrochen werden kann, wodurch eine besonders effiziente und energiesparende Kupplungsanordnung vorgeschlagen wird. Weiterhin kann durch den Sicherungsring ein Schleppmoment zwischen der Schiebemuffe und der Schaltgabel in der Neutralstellung verhindert bzw. reduziert werden.

In einer weiteren Konkretisierung ist vorgesehen, dass die Haltenut und/oder der Sicherungsring eine Anlaufschräge aufweist. Der Sicherungsring ist bei einer axialen Verschiebung der Schiebemuffe von der Neutralstellung in die Freilaufstellung über die Anlaufschräge radial in die Aufnahmenut verformbar, sodass die Schiebemuffe in Richtung der Neutralstellung und der Sperrstellung frei verschiebbar bzw. die axiale Sicherung der Schiebemuffe aufgehoben ist. Insbesondere weist die Anlaufschräge in Richtung der Freilaufstellung einen ansteigenden Verlauf auf, sodass der Grad der Verformung mit zunehmender Verschiebung der Schiebmuffe von der Neutralstellung in Richtung der Freilaufstellung zunimmt. Vorzugsweise ist die Anlaufschräge in der axialen Richtung an der Nutflanke der Haltenut ausgebildet. Hingegen erstreckt sich die der Anlaufschräge gegenüberliegende Nutflanke der Haltenut gerade, insbesondere in einer Radialeben der Hauptdrehachse, wodurch ein axialer Endanschlag für die Schiebemuffe über die Neutralstellung hinaus definiert wird. Alternativ ist die Anlaufschräge oder optional ergänzend eine weitere Anlaufschräge an einem Außendurchmesser des Sicherungsrings ausgebildet. Es wird somit eine Schiebemuffe vorgeschlagen, welche bei einer Betätigung in der Neutralstellung ein selbststätiges Lösen der axialen Sicherung gewährleistet. Zudem wird der durch den Betätigungsaktuator notwendige Kraftaufwand zur Überwindung der durch den Sicherungsring aufgebrachten Haltekraft deutlich reduziert.

In einer weiteren konkreten Realisierung ist vorgesehen, dass der Sicherungsring in einer axialen Gegenrichtung einen Endanschlag für den Steuerring definiert, wenn die Schiebemuffe in der Freilaufstellung und/oder der Sperrstellung angeordnet ist. Der Sicherungsring ist hierzu in der axialen Richtung betrachtet vor dem Steuerring, insbesondere im Bereich der Führungskulisse angeordnet. Anders formuliert, ist der Sicherungsring derart an dem ersten Kupplungspartner angeordnet, sodass eine axiale Bewegung des Steuerrings in der Freilaufstellung, insbesondere in der axialen Gegenrichtung durch den Sicherungsring begrenzt ist. Vorzugsweise erstreckt sich der Sicherungsring abschnittsweise innerhalb der Führungskulisse, sodass der Steuerstab, insbesondere in der Freilaufstellung der Schiebemuffe, in der axialen Gegenrichtung an dem Sicherungsring abgestützt und/oder abstützbar ist. Durch die axiale Sicherung des Steuerrings in der Freilauf- bzw. Sperrstellung wird eine Kupplungsanordnung vorgeschlagen, welche als vormontierte Baueinheit einen verliersicheren Zusammenbau des Freilaufs sicherstellt, sodass ein zusätzlicher Sicherungsring eingespart werden kann.

In einer weiteren Ausgestaltung ist vorgesehen, dass der erste Kupplungspartner eine Außenverzahnung und der zweite Kupplungspartner eine Sperrverzahnung aufweist. Die Schiebemuffe steht über eine Innenverzahnung mit der Außenverzahnung drehfest in Eingriff, wobei die Innenverzahnung bei einer Verschiebung in die Sperrstellung zusätzlich mit der Sperrverzahnung drehfest in Eingriff bringbar ist, um die beiden Kupplungspartner drehfest miteinander zu koppeln. Die Außen-, Innen-, und Sperrverzahnung sind jeweils als eine in axialer Richtung in Bezug auf die Hauptdrehachse ausgerichtete Geradverzahnung ausgebildet, sodass die Schiebemuffe und der erste bzw. zweite Kupplungspartner relativ zueinander in axialer Richtung zu der Hauptdrehachse verschiebbar sind und in Umlaufrichtung drehfest zueinander gekoppelt sind. Insbesondere sind zumindest die Innenverzahnung der Schiebemuffe und die Außenverzahnung des ersten Kupplungspartners durch, zu der Hauptdrehachse axial verlaufende Stege oder Zähne oder Nuten ausgebildet. Vorzugsweise weist die Schiebemuffe axial an der zum zweiten Kupplungspartner gerichteten Seite der Innenverzahnung eine Dachverzahnung auf. Alternativ oder optional ergänzend weist der zweite Kupplungspartner axial an der zur Schiebemuffe gerichteten Seite der Sperrverzahnung eine Dachverzahnung auf.

Ein weiterer Gegenstand der Erfindung betrifft einen Antriebsstrang mit einer ersten und einer zweiten Welle sowie mit der Kupplungsanordnung, wie diese bereits zuvor beschrieben wurde bzw. nach einem der Ansprüche 1 bis 9. Die erste Welle ist drehfest mit dem ersten Kupplungspartner und die zweite Welle ist drehfest mit dem zweiten Kupplungspartner verbunden, wobei eine Drehmomentübertragung zwischen den beiden Wellen durch ein axiales Verschieben einer Schiebemuffe der Kupplungsanordnung steuerbar ist. Insbesondere weist der erste Kupplungspartner eine erste Mitnahmeverzahnung zur drehfesten Anbindung der ersten Welle und der zweite Kupplungspartner eine zweite Mitnahmeverzahnung zur drehfesten Anbindung der zweiten Welle auf. Der Antriebsstrang ist vorzugsweise zum Antriebs eines Fahrzeuges, insbesondere eines Kraftfahrzeuges, ausgebildet und/oder geeignet. Vorzugsweise ist der Antriebsstrang für eine elektrische Achse des Fahrzeugs ausgebildet und/oder geeignet ist. Die Kupplungsanordnung kann dabei Teil einer Zu- oder Abschalteinheit ("Connect- oder Disconnect-Einheit") ausgebildet sein, um beispielsweise einen elektrischen Antrieb von den Antriebswellen des Fahrzeuges zu lösen. Hierzu kann die eine Welle als eine motorseitige Antriebswelle und die andere Welle als eine radseitige Abtriebswelle ausgebildet sein.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine Explosionsdarstellung einer Kupplungsanordnung als ein Ausführungsbeispiel der Erfindung;
- Figur 2: eine axiale Ansicht eines ersten Kupplungspartners der in Figur 1 beschriebenen Kupplungsanordnung;
- Figur 3: eine perspektivische Rückansicht der Kupplungsanordnung;
- Figur 4: eine perspektivische Vorderansicht der Kupplungsanordnung;
- Figur 5: eine Schnittdarstellung der Kupplungsanordnung in einer Freilaufstellung;
- Figur 6: die Kupplungsanordnung in gleicher Darstellung wie Figur 5 in einer Neutralstellung;
- Figur 7: eine Schnittdarstellung einer alternativen Ausführung der Kupplungsanordnung in einer Sperrstellung;
- Figur 8: die Kupplungsanordnung in gleicher Darstellung wie Figur 7 in einer Freilaufstellung;
- Figur 9: die Kupplungsanordnung in gleicher Darstellung wie Figur 7 in einer Neutralstellung.

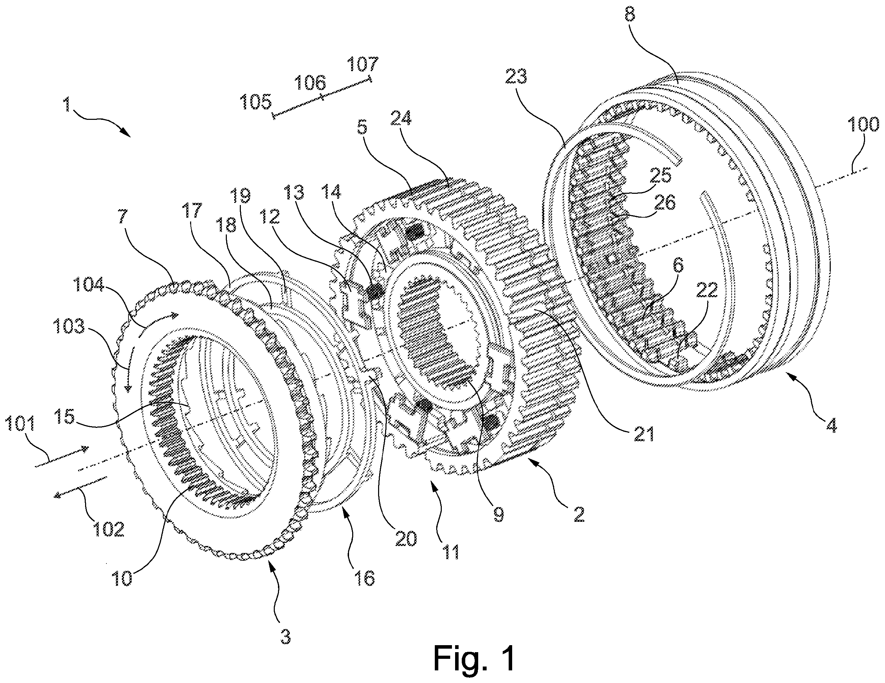

Figur 1 zeigt eine Kupplungsanordnung 1 in einer Explosionsdarstellung als ein Ausführungsbeispiel der Erfindung. Die Kupplungsanordnung 1 ist als eine Klauenkupplung ausgebildet, wobei die Kupplungsanordnung hierzu einen ersten und einen zweiten Kupplungspartner 2, 3 sowie eine Schiebemuffe 4 aufweist, welche in Bezug auf eine gemeinsame Hauptdrehachse 100 koaxial zueinander angeordnet sind.

Der erste Kupplungspartner 2 ist als eine Nabe, insbesondere ein Muffenträger, ausgebildet, an welchem die Schiebemuffe 4 drehfest angeordnet ist und in einer axialen Richtung 101 sowie einer axiale Gegenrichtung 102 in Bezug auf die Hauptdrehachse 100 verschiebbar angeordnet ist. Hierzu weist der erste Kupplungspartner 2 am Außenumfang eine Außenverzahnung 5 und die Schiebemuffe 4 am Innenumfang eine Innenverzahnung 6 auf, welche jeweils als eine axial zur Hauptdrehachse 100 erstreckende Geradverzahnung ausgebildet sind.

Der zweite Kupplungspartner 3 ist als ein Kupplungskörper ausgebildet, welcher an seinem Außenumfang eine Sperrverzahnung 7 aufweist, wobei die Schiebemuffe 4 bei einer axialen Verschiebung in der axialen Gegenrichtung 102 entlang der Hauptdrehachse 100 mit der Sperrverzahnung 7 drehfest in Eingriff bringbar ist, um die beiden Kupplungspartner 2, 3 drehfest miteinander zu koppeln. Beispielsweise sind der erste und der zweite Kupplungspartner 2, 3 jeweils als ein Stirnrad bzw. ein stirnverzahntes Rad ausgebildet.

Die Schiebemuffe 4 kann mit einem Betätigungsaktuator, nicht dargestellt, verbunden sein, welcher die Schiebemuffe 4 in axialer Richtung in Bezug auf die Hauptdrehachse 100 mit einer Betätigungskraft beaufschlagt. Um die Schiebemuffe 4 in der axialen Richtung 101 bzw. der der axialen Gegenrichtung 102 während einer Rotation um die Hauptdrehachse 100 zu verschieben, weist die Schiebemuffe 4 an ihrem Außenumfang eine umlaufende Nut 8 auf, in welche beispielsweise eine Schaltgabel des Betätigungsaktuators eingreifen kann.

Der erste und der zweite Kupplungspartner 2, 3 sind jeweils mit einem rotierenden Bauteil, z.B. einer Welle, drehfest verbunden. Hierzu weist der erste Kupplungspartner 2 am Innenumfang eine erste Mitnahmeverzahnung 9 und der zweite Kupplungspartner 3 am Innenumfang eine zweite Mitnahmeverzahnung 10 auf. Die erste und die zweite Mitnahmeverzahnung 9, 10 sind jeweils als eine Steckverzahnung ausgebildet. Beispielsweise kann der erste Kupplungspartner 2 auf einer Abtriebsseite und der zweite Kupplungspartner 3 auf einer Antriebsseite angeordnet sein.

Die Kupplungsanordnung 1 weist zudem einen schaltbaren Freilauf 11 auf, welcher axial zwischen den beiden Kupplungspartnern 2, 3 angeordnet ist und radial innerhalb des ersten Kupplungspartners 2 aufgenommen ist. Der Freilauf 11 weist mehrere, insbesondere sechs um die Hauptdrehachse 100 verteilte Sperrkörper 12 auf, welche über jeweils eine Feder 13 in jeweils einer an dem ersten Kupplungspartner 2 ausgebildeten Aufnahmetasche 14 federnd abgestützt sind. Die Aufnahmetaschen 14 sind jeweils als stirnseitig in den ersten Kupplungspartner 2 eingebrachte Vertiefungen ausgebildet, welche im Wesentlichen eine Negativkontur der Sperrkörper 12 bilden. Die Sperrkörper 12 sind in axialer Richtung beweglich und in Umfangsrichtung formschlüssig in der jeweils zugehörigen Aufnahmetasche 14 aufgenommen.

Der zweite Kupplungspartner 3 weist an seiner den Sperrkörpern 12 zugewandten axialen Stirnseite einen zylindrischen Ansatz mit einer rampenförmigen Sperrkontur 15 auf, mit welcher die Sperrköper 12 in einem zugeschalteten Zustand des Freilaufs 11 in einer Drehrichtung 103 des zweiten Kupplungspartners 3 formschlüssig zusammenwirken können. In einer der Drehrichtung 103 entgegen gerichteten Gegendrehrichtung 104 sind der erste und der zweite Kupplungspartner 2, 3 relativ zueinander verdrehbar, wobei die Sperrkörper 14 im zugeschalteten Zustand des Freilaufs 11 an der Sperrkontur 15 abgleiten. Die Sperrkörper 12 sind als Sperrklinken ausgebildet und die Sperrkontur 15 ist durch mehrere in Umfangsrichtung ansteigende Sägezahnrampen gebildet.

Der Freilauf 11 weist zudem einen axial bewegbaren Steuerring 16 zur Steuerung des Freilaufs 11 auf, welcher bezogen auf die Hauptdrehachse 100 koaxial zu den beiden Kupplungspartnern 2, 3 angeordnet ist und in der axialen Richtung 101 an den Sperrkörpern 12 entgegen einer Federkraft der Federn 13 abgestützt ist. Der Steuerring 16 ist durch einen Außenring 17 sowie einem konzentrisch dazu angeordneten Innenring 18 gebildet, welche in radialer Richtung voneinander beabstandet und über mehrere Verbindungsstege 19 miteinander verbunden sind.

Der Steuerring 16 weist drei am Außenumfang des Außenrings 17 angeordnete Steuerstäbe 20 auf, welche jeweils in einer in die Außenverzahnung 5 des ersten Kupplungspartners 2 eingebrachten Steuerkulisse 21 aufgenommen sind. Der Steuerring 16 ist dabei über die Steuerstäbe 20 in der jeweiligen Steuerkulisse 21 in axialer Richtung geradgeführt und in Umfangsrichtung drehfest abgestützt. Die Steuerstäbe 20 durchgreifen dabei die jeweilige Steuerkulisse 21 in radialer Richtung und sind mit einer am Innenumfang der Schiebemuffe 4 angeordneten Steuerkontur 22 bewegungskoppelt. Die Steuerkontur 22 ist als ein radial nach innen gerichteter Zahn ausgebildet, welcher in der axialen Richtung 101 an dem jeweils zugehörigen Steuerstab 20 abgestützt bzw. abstützbar ist, um den Steuerring 16 bei einer Verschiebung der Schiebemuffe 4 mitzunehmen.

Die Schiebemuffe 4 ist entlang der Hauptdrehachse 100 in eine Sperrstellung 105, eine Freilaufstellung 106 sowie eine Neutralstellung 107 verschiebbar. In der Sperrstellung 105 steht die Schiebemuffe 4 über die Innenverzahnung 6 einerseits mit der Außenverzahnung 5 und andererseits mit der Sperrverzahnung 7 in Eingriff, sodass die beiden Kupplungspartner 2, 3 in der Drehrichtung 103 und der Gegendrehrichtung 104 drehfest miteinander verbunden sind. In der Freilaufstellung 106 steht die Schiebemuffe 4 über die Innenverzahnung 6 ausschließlich mit der Außenverzahnung 5 in Eingriff, wobei zugleich der Freilauf 11 zugeschaltet ist, sodass die beiden Kupplungspartner 2, 3 in der Drehrichtung 103 drehfest miteinander verbunden sind und in der Gegendrehrichtung 104 relativ zueinander verdrehbar sind. In der Neutralstellung 107 steht die Schiebemuffe 4 über die Innenverzahnung 6 ausschließlich mit der Außenverzahnung 5 in Eingriff, wobei zugleich der Freilauf 11 abgeschaltet ist, sodass die beiden Kupplungspartner 2, 3 in der Drehrichtung 103 und in der Gegendrehrichtung 104 relativ zueinander verdrehbar sind.

Die Kupplungsanordnung 1 weist einen Sicherungsring 23 auf, welcher zur axialen Sicherung der Schiebemuffe 4 in der Neutralstellung 107 dient. Der erste Kupplungspartner 2 weist an seinem Außenumfang eine umlaufende Aufnahmenut 24 auf, in welcher der Sicherungsring 23 montiert ist. Die Schiebemuffe 4 weist an ihrem Innenumfang eine abschnittsweise in die Innenverzahnung 6 umlaufend eingebrachte Haltenut 25 auf, wobei der Sicherungsring 23 in der Neutralstellung 107 abschnittsweise in die Haltenut 25 eingreift, um die Schiebemuffe 4 in axialer Richtung formschlüssig an dem ersten Kupplungspartner 2 zu sichern.

Die Haltenut 25 weist eine in der axialen Gegenrichtung 102 ansteigende Anlaufschräge 26 auf, wobei der Sicherungsring 23 bei einer Verschiebung der Schiebemuffe 4 von der Neutralstellung 107 in der axialen Gegenrichtung 102 über die Anlaufschräge 26 radial in die Aufnahmenut 24 verformt wird, um den Formschluss zwischen Schiebemuffe 4 und ersten Kupplungspartner 2 aufzuheben. Der Sicherungsring 23 ist hierzu als umlaufend unterbrochener Sprengring ausgebildet, welcher bei einer radialen Verformung eine Änderung des Durchmessers erfährt.

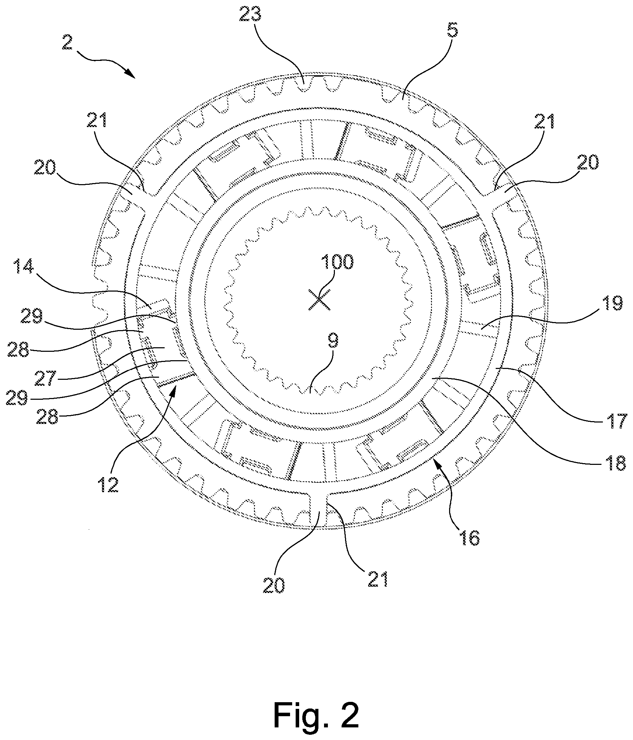

Figur 2 zeigt den ersten Kupplungspartner 2 in einer axialen Ansicht bezüglich der Hauptachse 100. Die in den Aufnahmetaschen 14 aufgenommenen Sperrkörper 12 weisen jeweils einen Grundkörperabschnitt 27 auf, wobei sich an den Grundkörperabschnitt 27 jeweils zwei radial nach außen gerichtete Anlageabschnitte 28 sowie zwei radial nach innen gerichtete Anlageabschnitte 29 anschließen. Der Steuerring 16 ist in der axialen Richtung 101, wie in Figur 1 beschrieben, mit dem Außenring 17 an den äußeren Anlageabschnitten 28 und mit dem Innenring 18 an den inneren Anlageabschnitten 29 der Sperrkörper 12 abgestützt.

Die Grundkörperabschnitte 27 sind radial jeweils zwischen dem Außen- und dem Innenring 17, 18 angeordnet, wobei die Sperrkontur 15, wie in Figur 1 beschrieben, in der Freilaufstellung 106 der Schiebemuffe 4 zwischen Außen- und Innenring 17, 18 angeordnet ist und mit den Grundkörperabschnitten 27 der Sperrköper 12 bei einer Verdrehung des zweiten Kupplungspartners 3 in der Drehrichtung 103 formschlüssig in Eingriff bringbar ist. Bei einer axialen Verschiebung des Steuerrings 16 in der axialen Richtung 101 bzw. in die Neutralstellung 107, werden die Sperrkörper 12 über den Steuerring 16 entgegen der Federkraft in die Aufnahmetaschen 14 eingesteuert, sodass die Sperrkörper 12 in der jeweiligen Aufnahmetasche 14 versenkt sind und/oder mit der Sperrkontur 15 außer Eingriff stehen.

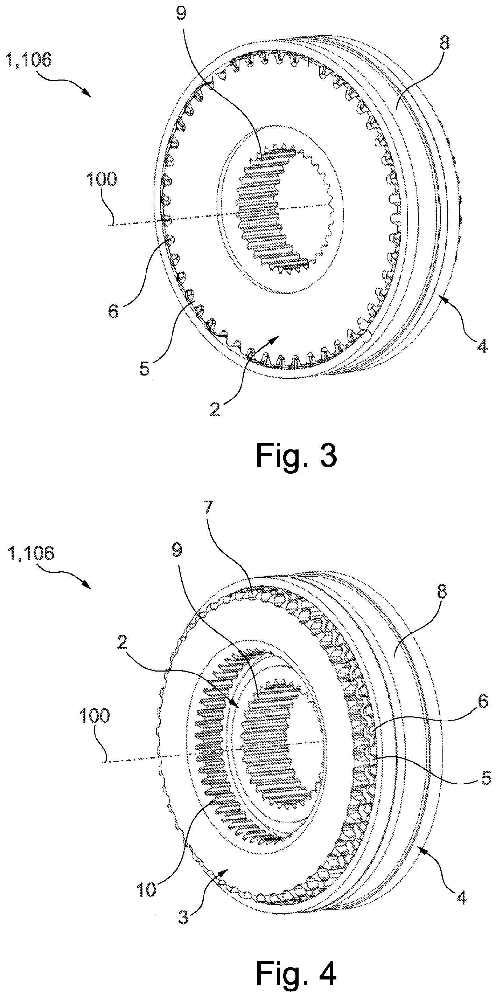

Die Figuren 3 und 4 zeigen die Kupplungsanordnung 1 im zusammengebauten Zustand jeweils in einer unterschiedlichen perspektivischen Ansicht. Dabei ist die Kupplungsanordnung 1 in Figur 3 von schräg hinten betrachtet und in Figur 4 von schräg vorne betrachtet dargestellt. Die Schiebemuffe 4 befindet sich in den gezeigten Darstellungen in der Freilaufstellung 106, wobei die Innenverzahnung 6 und die Sperrverzahnung 7 außer Eingriff stehen und der Freilauf 11, wie bereits in Figur 1 beschrieben, zugeschaltet ist.

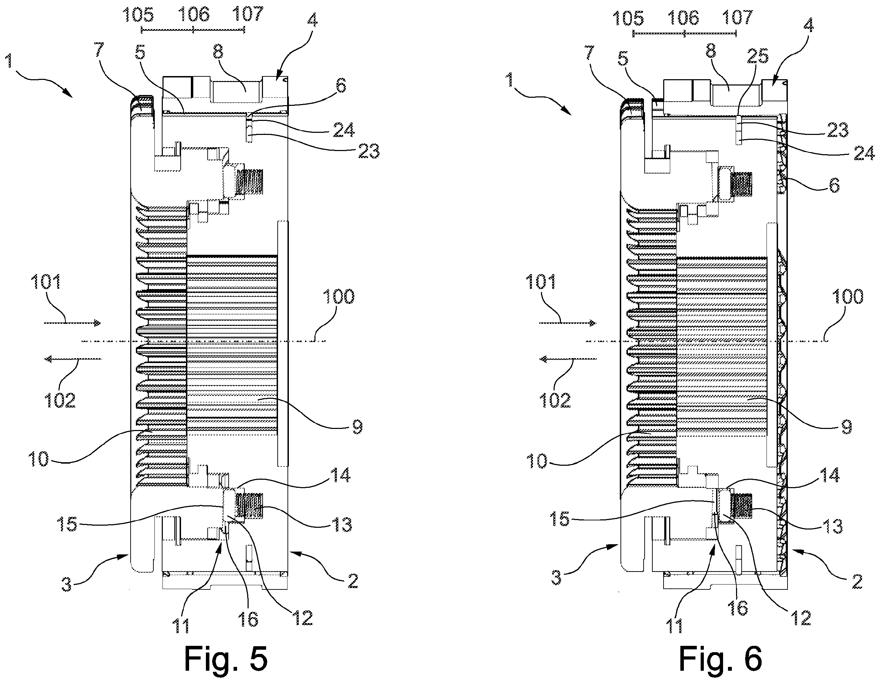

Die Figuren 5 und 6 zeigen jeweils eine Schnittdarstellung der Kupplungsanordnung 1 entlang der Hauptdrehachse 100. In Figur 5 ist die Schiebemuffe 4 in der Freilaufstellung 106 angeordnet und in Figur 6 ist die Schiebemuffe 4 in der Neutralstellung 107 angeordnet. Beispielsweise wird ein Drehmoment einer mit der zweiten Mitnahmeverzahnung 10 in Eingriff stehenden Welle, nicht dargestellt, auf den zweiten Kupplungspartner 3 übertragen, wobei abhängig von der Stellung der Schiebemuffe 4 das Drehmoment auf den ersten Kupplungspartner 2 übertragen werden kann und auf eine mit der ersten Mitnahmeverzahnung 9 in Eingriff stehende Welle, nicht dargestellt, übertragen werden kann.

In der Freilaufstellung 106 sind die Sperrkörper 12 teilweise in der axialen Gegenrichtung 102 aus der Aufnahmetasche 14 ausgesteuert, sodass beispielsweise ein Drehmoment über die Aufnahmetaschen 14 auf den ersten Kupplungspartner 2 übertragen werden kann. Die Sperrkörper 12 sind dabei in Richtung der Sperrkontur 15 mit der Federkraft der Federn 13 beaufschlagt, wobei das Drehmoment von dem zweiten Kupplungspartner 3 drehrichtungsabhängig über den Freilauf 11 auf den ersten Kupplungspartner 2 übertragen wird, wenn die Sperrkörper 12 durch die Federn 13 in die Sperrkontur 15 gedrückt werden. Bei Umkehr der Drehrichtung gleitet die Sperrkontur 15 aufgrund der Rampenform an den Sperrkörpern 12 ab, wobei eine Übertragung des Drehmoments unterbrochen ist. Der Sicherungsring 23 ist in der Freilaufstellung 106 in die Aufnahmenut 24 verformt bzw. durch die Innenverzahnung 6 in der Aufnahmenut 24 unter Vorspannung gehalten.

Bei einer Verschiebung der Schiebemuffe 4 in die Neutralstellung 107 wird der Steuerring 16 durch die Steuerkontur 22, wie in Figur 1 gezeigt, in der axialen Richtung 101 verschoben, wobei die Sperrkörper 12 über den Steuerring 16 unter Stauchung der Federn 13 in die Aufnahmetaschen 14 eingerückt werden. Dabei werden die Sperrkörper 12 relativ zu der Sperrkontur 15 in den Aufnahmetaschen 14 versenkt, sodass die beiden Kupplungspartner 2**,** 3 drehrichtungsunabhängig voneinander entkoppelt sind. Durch die Stauchung der Federn 13 wird die auf den Steuerring 16 einwirkende Federkraft erhöht, sodass der Kraftaufwand zum Halten der Schiebemuffe 4 in der Neutralstellung 107 ebenfalls erhöht ist.

Aus diesem Grund ist die Schiebemuffe 4 in der Neutralstellung 107 zusätzlich durch den Sicherungsring 23 axial festgehalten, sodass die auf den Steuerring 16 einwirkenden Federkräfte über den Sicherungsring 23 in den ersten Kupplungspartner 2 abgleitet werden können. Hierzu rastet der Sicherungsring 23 bei Erreichen der Neutralstellung 107 aufgrund der einwirkenden Vorspannung selbsttätig in die Haltekontur 25 ein. Weiterhin dient der Sicherungsring 23 dazu, um die einzelnen Bauteile des Freilaufs 11 nach dem Zusammenbau zu fixieren. Zudem wird in der Neutralstellung ein Schleppmoment zwischen Schiebemuffe 4 und der Schaltgabel des Betätigungsaktuators reduziert.

Es wird somit eine Kupplungsanordnung 1 vorgeschlagen, welche in einfacher Weise unter Last zwischen den einzelnen Stellungen 105, 106, 107 geschaltet werden kann. Beispielsweise kann die Kupplungsanordnung 1 mit schaltbarem Freilauf 11 somit in einfacher Weise als Teil einer Trennkupplung in einen Antriebsstrang eines Fahrzeugs integriert werden.

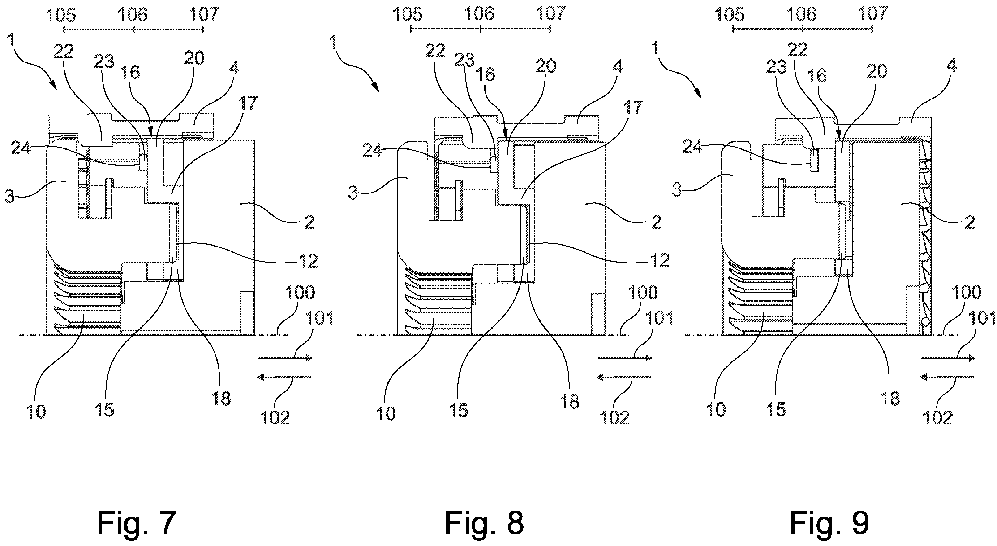

Die Figuren 7 bis 9 zeigen jeweils eine alternative Ausgestaltung der Kupplungsanordnung 1 in einer Schnittdarstellung entlang der Hauptdrehachse 100, wobei die Schiebemuffe 4 in Figur 7 in der Sperrstellung 105, in Figur 8 in der Freilaufstellung 106 und in Figur 8 in der Neutralstellung 107 angeordnet ist. Im Vergleich zu der zuvor beschriebenen Ausführung, ist der Sicherungsring 23 in der axialen Richtung 101 betrachtet vor dem Steuerring 16 angeordnet und bildet somit in der axialen Gegenrichtung 102 einen axialen Endanschlag für den Steuerring 16 bzw. die Steuerstäbe 20.

Die Schiebemuffe 4 ist in der axialen Richtung 101 über die Steuerkontur 22 an dem Steuerstab 20 abgestützt, wobei der Steuerring 16 bei einer Verschiebung der Schiebemuffe 4 von der Freilaufstellung 106 in die Sperrstellung 105 an den Sicherungsring 23 abgestützt bleibt, sodass die Steuerkontur 22 von dem Steuerstab 20 abhebt bzw. beabstandet ist, wie in Figur 7 dargestellt. Bei einer Verschiebung der Schiebemuffe 4 von der Sperrstellung 105 in die Freilaufstellung 106 wird die Steuerkontur 22 in der axialen Richtung 101 wieder an den Steuerstab 20 angesetzt bzw. abgestützt, wie in Figur 8 dargestellt, wobei bei einer weiteren Verschiebung der Schiebemuffe 4 in die Neutralstellung 107 der Steuerring 16 in der axialen Richtung 101 durch die Steuerkontur 22 mitgenommen wird. Der Sicherungsring 23 dient somit einerseits zu Bildung einer definierten Endposition für den Steuerring 16 sowie zur Sicherung des Freilaufs 11, insbesondere des Steuerrings 16 samt Sperrkörper 12 und Federn 13, bei einer Vormontage an dem ersten Kupplungspartner 2.

Wie diesem Ausführungsbeispiel zu entnehmen, durchgreift die Steuerkontur 22 zumindest in der Freilaufstellung 106 den Steuerring 16 in der axialen Richtung 101 bzw. ist in radialer Richtung zwischen Außen- und Innenring 17, 18 angeordnet, sodass die Sperrkörper 12 mit der Sperrkontur 15 in Kontakt gebracht werden können. Beispielsweise kann der Steuerring 16 über den Außen- und Innenring 17, 18 zusätzlich in axialer Richtung an der Steuerkontur 22 bzw. zylindrischen Ansatz geführt und/oder zentriert sein.

### Bezugszeichenliste

- 1: Kupplungsanordnung
- 2: erster Kupplungspartner
- 3: zweiter Kupplungspartner
- 4: Schiebemuffe
- 5: Außenverzahnung
- 6: Innenverzahnung
- 7: Sperrverzahnung
- 8: Nut
- 9: erste Mitnahmeverzahnung
- 10: zweite Mitnahmeverzahnung
- 11: Freilauf
- 12: Sperrkörper
- 13: Feder
- 14: Aufnahmetasche
- 15: Sperrkontur
- 16: Steuerring
- 17: Außenring
- 18: Innenring
- 19: Verbindungssteg
- 20: Steuerstab
- 21: Steuerkulisse
- 22: Steuerkontur
- 23: Sicherungsring
- 24: Aufnahmenut
- 25: Haltenut
- 26: Anlaufschräge
- 27: Grundkörperabschnitt
- 28: äußerer Anlageabschnitt
- 29: innerer Anlageabschnitt
- 100: Hauptdrehachse
- 101: axiale Richtung
- 102: axiale Gegenrichtung
- 103: Drehrichtung
- 104: Gegendrehrichtung
- 105: Sperrstellung
- 106: Freilaufstellung
- 107: Neutralstellung

## Patentansprüche

1. Kupplungsanordnung (1)
mit einem ersten und einem zweiten Kupplungspartner (2, 3),
mit einem schaltbaren Freilauf (11), wobei der Freilauf (11) zwischen dem ersten und dem zweiten Kupplungspartner (2, 3) angeordnet ist, um die beiden Kupplungspartner (2, 3) drehrichtungsabhängig miteinander zu koppeln, wobei der Freilauf (11) eine Mehrzahl von federbelasteten Sperrkörpern (12) aufweist, welche zumindest in Umfangsrichtung an dem einen Kupplungspartner (2) festgelegt sind und mit einer an dem anderen Kupplungspartner (3) angeordneten rampenförmigen Sperrkontur (15) in Abhängigkeit der Drehrichtung formschlüssig zusammenwirken,
**gekennzeichnet durch**
eine koaxial zu den beiden Kupplungspartnern (2, 3) verschiebbar angeordnete Schiebemuffe (4) zur Steuerung der Kupplungsanordnung (1), wobei in einer Sperrstellung (105) der Schiebemuffe (4) die beiden Kupplungspartner (2, 3) in einer Drehrichtung (103) und in einer Gegendrehrichtung (104) über die Schiebemuffe (4) drehfest miteinander verbunden sind, in einer Freilaufstellung (106) der Schiebemuffe (4) die beiden Kupplungspartner (2, 3) über den Freilauf (11) in genau einer Drehrichtung (103) drehfest miteinander verbunden sind und in einer Neutralstellung (107) der Schiebemuffe (4) die Sperrkörper durch die Schiebemuffe (4) außer Eingriff zu der Sperrkontur (15) gehalten sind, sodass die beiden Kupplungspartner (2, 3) in der Drehrichtung (103) und in der Gegendrehrichtung (104) relativ zueinander verdrehbar sind.

2. Kupplungsanordnung (1) nach Anspruch 1, **dadurch gekennzeichnet, dass** der Freilauf (11) in Bezug auf eine Hauptdrehachse (100) axial zwischen den beiden Kupplungspartnern (2, 3) angeordnet ist, wobei der erste Kupplungspartner (2) an einer axialen Stirnseite eine Mehrzahl an Aufnahmetaschen (14) zur Aufnahme der Sperrkörper (12) aufweist und der zweite Kupplungspartner (3) an einer den Sperrkörpern (12) gegenüberliegenden axialen Stirnseite die Sperrkontur (15) aufweist.

3. Kupplungsanordnung (1) nach Anspruch 1 oder 2, **dadurch gekennzeichnet, dass** der Freilauf (11) einen in axialer Richtung mit der Schiebemuffe (4) bewegungsgekoppelten Steuerring (16) aufweist, welcher in einer axialen Richtung (101) in Bezug auf die Hauptdrehachse (100) entgegen einer Federkraft an den Sperrkörpern (12) anliegt, um eine axiale Bewegung der Schiebemuffe (4) auf die Sperrkörper (12) zu übertragen.

4. Kupplungsanordnung (1) nach Anspruch 3, **dadurch gekennzeichnet, dass** der Steuerring (16) mindestens einen radial nach außen gerichteten Steuerstab (20) aufweist, welcher axial in einer in dem ersten Kupplungspartner (2) ausgebildeten Steuerkulisse (21) geführt ist, wobei die Schiebemuffe (4) über den Steuerstab (20) mit dem Steuerring (16) bewegungsgekoppelt ist.

5. Kupplungsanordnung (1) nach Anspruch 4, **dadurch gekennzeichnet, dass** die Schiebemuffe (4) an ihrem Innenumfang mindestens eine Steuerkontur (22) aufweist, welche in der axialen Richtung (101) an dem Steuerstab (20) abgestützt ist, um den Steuerring (16) bei einer Bewegung der Schiebemuffe (4) in der axialen Richtung (101) zumindest von der Freilaufstellung (106) in die Neutralstellung (107) entgegen der Federkraft mitzunehmen.

6. Kupplungsanordnung (1) nach einem der vorhergehenden Ansprüche, **gekennzeichnet durch** einen Sicherungsring (23), wobei der erste Kupplungspartner (2) eine umlaufende Aufnahmenut (24) und die Schiebemuffe (4) eine umlaufende Haltenut (25) aufweist, wobei der Sicherungsring (23) in der Aufnahmenut (24) montiert ist und in der Neutralstellung (107) der Schiebemuffe (4) abschnittsweise in die Haltenut (25) eingreift, um die Schiebemuffe (4) in der Neutralstellung axial an dem ersten Kupplungspartner (2) zu sichern.

7. Kupplungsanordnung (1) nach Anspruch 6, **dadurch gekennzeichnet, dass** die Haltenut (25) und/oder der Sicherungsring (23) eine Anlaufschräge (26) aufweist, wobei der Sicherungsring (23) bei einer axialen Verschiebung der Schiebemuffe (4) von der Neutralstellung (107) in die Freilaufstellung (106) über die Anlaufschräge (26) radial in die Aufnahmenut (24) verformt wird, sodass die Schiebemuffe (4) in Richtung der Neutralstellung (107) und der Sperrstellung (105) frei verschiebbar ist.

8. Kupplungsanordnung (1) nach Anspruch 6 oder 7, jeweils in Verbindung mit Anspruch 3, **dadurch gekennzeichnet dass** der Sicherungsring (23) in einer axialen Gegenrichtung (102) einen Endanschlag für den Steuerring (16) definiert, wenn die Schiebemuffe (4) in der Freilaufstellung (106) und/oder der Sperrstellung (105) angeordnet ist.

9. Kupplungsanordnung (1) nach einem der vorhergehenden Ansprüche, **dadurch gekennzeichnet, dass** der erste Kupplungspartner (2) eine Außenverzahnung (5) und der zweite Kupplungspartner (3) eine Sperrverzahnung (7) aufweist, wobei die Schiebemuffe (4) über eine Innenverzahnung (6) mit der Außenverzahnung (5) drehfest in Eingriff steht und bei einer Verschiebung in die Sperrstellung (105) zusätzlich über die Innenverzahnung (6) mit der Sperrverzahnung (7) drehfest in Eingriff bringbar ist, um die beiden Kupplungspartner (2, 3) drehfest miteinander zu koppeln.

10. Antriebsstrang mit einer ersten und einer zweiten Welle, mit der Kupplungsanordnung (1) nach einem der vorhergehenden Ansprüche, **dadurch gekennzeichnet, dass** die erste Welle drehfest mit dem ersten Kupplungspartner (2) und die zweite Welle drehfest mit dem zweiten Kupplungspartner (3) verbunden ist, wobei eine Drehmomentübertragung zwischen den beiden Wellen durch ein axiales Verschieben einer Schiebemuffe (4) der Kupplungsanordnung (1) steuerbar ist.

## Claims

1. A clutch assembly (1)
having a first and a second clutch partner (2, 3),
having a switchable freewheel (11), wherein the freewheel (11) is arranged between the first and the second clutch partner (2, 3) in order to couple the two clutch partners (2, 3) to each other according to the direction of rotation, wherein the freewheel (11) has a plurality of springloaded blocking bodies (12) which are fixed to one clutch partner (2), at least in the circumferential direction, and which form-fittingly interact with a ramp-shaped blocking contour (15) arranged on the other clutch partner (3) according to the direction of rotation,
**characterised by**
a sliding sleeve (4) arranged coaxially to the two clutch partners (2, 3) for controlling the clutch assembly (1), wherein in a blocking position (105) of the sliding sleeve (4), the two clutch partners (2, 3) are interconnected in a rotationally fixed manner in one direction of rotation (103) and in the opposite direction of rotation (104) via the sliding sleeve (4), in a freewheeling position (106) of the sliding sleeve (4), the two clutch partners (2, 3) are interconnected in a rotationally fixed manner in precisely one direction of rotation (103) via the freewheel (11) and, in a neutral position (107) of the sliding sleeve (4), the blocking bodies are prevented from engaging with the blocking contour (15) by the sliding sleeve (4) so that the two clutch partners (2, 3) are rotatable relative to one another in the direction of rotation (103) and in the opposite direction of rotation (104).

2. The clutch assembly (1) according to claim 1, **characterised in that** the freewheel (11) is arranged axially between the two clutch partners (2, 3) with respect to a main axis of rotation (100), wherein the first clutch partner (2) has a plurality of receiving pockets (14) for receiving the blocking bodies (12) on an axial end face and the second clutch partner (3) has the blocking contour (15) on an axial end face opposite the blocking bodies (12).

3. The clutch assembly (1) according to claim 1 or 2, **characterised in that** the freewheel (11) has a control ring (16) axially coupled to the sliding sleeve (4) for movement, which in an axial direction (101) with respect to the main axis of rotation (100) bears against the blocking bodies (12) against a spring force in order to transmit an axial movement of the sliding sleeve (4) to the blocking bodies (12).

4. The clutch assembly (1) according to claim 3, **characterised in that** the control ring (16) has at least one radially outwardly directed control rod (20) which is guided axially in a control cam (21) formed in the first clutch partner (2), wherein the sliding sleeve (4) is coupled to the control ring (16) for movement via the control rod (20).

5. The clutch assembly (1) according to claim 4, **characterised in that** the sliding sleeve (4) has at least one control contour (22) on its inner circumference, which is supported in the axial direction (101) on the control rod (20) in order to carry the control ring (16) along against the spring force when the sliding sleeve (4) is moved in the axial direction (101) at least from the freewheel position (106) to the neutral position (107).

6. The clutch assembly (1) according to any one of the preceding claims, **characterised by** a retaining ring (23), wherein the first clutch partner (2) has a circumferential receiving groove (24) and the sliding sleeve (4) has a circumferential retaining groove (25), wherein the retaining ring (23) is mounted in the receiving groove (24) and, in the neutral position (107) of the sliding sleeve (4), engages in sections in the retaining groove (25) to secure the sliding sleeve (4) axially to the first clutch partner (2) in the neutral position.

7. The clutch assembly (1) according to claim 6, **characterised in that** the retaining groove (25) and/or the retaining ring (23) has a chamfer (26), wherein the retaining ring (23) is deformed radially into the receiving groove (24) via the chamfer (26) when the sliding sleeve (4) is axially displaced from the neutral position (107) to the freewheel position (106), so that the sliding sleeve (4) is freely displaceable in the direction of the neutral position (107) and the blocking position (105).

8. The clutch assembly (1) according to claim 6 or 7, each in conjunction with claim 3, **characterised in that** the retaining ring (23) defines an end stop for the control ring (16) in an axial opposite direction (102) when the sliding sleeve (4) is arranged in the freewheel position (106) and/or the blocking position (105).

9. The clutch assembly (1) according to any one of the preceding claims, **characterised in that** the first clutch partner (2) has an external toothing (5) and the second clutch partner (3) has a blocking toothing (7), wherein the sliding sleeve (4) engages with the external toothing (5) in a rotationally fixed manner via an internal toothing (6) and, when shifted into the blocking position (105), can additionally be brought into rotationally fixed engagement with the blocking toothing (7) via the internal toothing (6) in order to couple the two clutch partners (2, 3) to each other in a rotationally fixed manner.

10. A drive train having a first and a second shaft, having the clutch assembly (1) according to any one of the preceding claims, **characterised in that** the first shaft is rotationally fixed to the first clutch partner (2) and the second shaft is rotationally fixed to the second clutch partner (3), wherein a torque transmission between the two shafts can be controlled by an axial displacement of a sliding sleeve (4) of the clutch assembly (1).

## Revendications

1. Ensemble embrayage (1)
comportant un premier et un second partenaire d'embrayage (2, 3),
comportant une roue libre (11) commutable, dans lequel la roue libre (11) est agencée entre le premier et le second partenaire d'embrayage (2, 3) afin de coupler les deux partenaires d'embrayage (2, 3) l'un à l'autre selon le sens de rotation, dans lequel la roue libre (11) présente une pluralité de corps de blocage à ressort (12) qui sont fixés au moins dans la direction circonférentielle sur un partenaire d'embrayage (2) et qui interagissent par complémentarité de forme avec un contour de blocage en forme de rampe (15) agencé sur l'autre partenaire d'embrayage (3) selon le sens de rotation,
**caractérisé par**
un manchon coulissant (4) agencé de manière à pouvoir se déplacer de manière coaxiale aux deux partenaires d'embrayage (2, 3) pour commander l'ensemble embrayage (1), dans lequel, dans une position de blocage (105) du manchon coulissant (4), les deux partenaires d'embrayage (2, 3) sont reliés l'un à l'autre de manière solidaire en rotation dans un sens de rotation (103) et dans un sens de rotation opposé (104) par l'intermédiaire du manchon coulissant (4), dans une position de roue libre (106) du manchon coulissant (4), les deux partenaires d'embrayage (2, 3) sont reliés l'un à l'autre de manière solidaire en rotation dans un sens de rotation (103) précis par l'intermédiaire de la roue libre (11) et dans une position neutre (107) du manchon coulissant (4), les corps de blocage sont empêchés de venir en prise avec le contour de blocage (15) par le manchon coulissant (4), de telle sorte que les deux partenaires d'embrayage (2, 3) peuvent tourner l'un par rapport à l'autre dans le sens de rotation (103) et dans le sens de rotation opposé (104).

2. Ensemble embrayage (1) selon la revendication 1, **caractérisé en ce que** la roue libre (11) est agencée axialement entre les deux partenaires d'embrayage (2, 3) par rapport à un axe principal de rotation (100), dans lequel le premier partenaire d'embrayage (2) présente une pluralité de poches de réception (14) pour recevoir les corps de blocage (12) sur une face frontale axiale et le second partenaire d'embrayage (3) présente le contour de blocage (15) sur une face frontale axiale opposée aux corps de blocage (12).

3. Ensemble embrayage (1) selon la revendication 1 ou 2, **caractérisé en ce que** la roue libre (11) présente une bague de commande (16) couplée en mouvement dans la direction axiale au manchon coulissant (4), laquelle bague, dans une direction axiale (101) par rapport à l'axe principal de rotation (100), s'appuie contre les corps de blocage (12) contre une force de ressort afin de transmettre un mouvement axial du manchon coulissant (4) aux corps de blocage (12).

4. Ensemble embrayage (1) selon la revendication 3, **caractérisé en ce que** la bague de commande (16) présente au moins une barre de commande (20) orientée radialement vers l'extérieur qui est guidée axialement dans une came de commande (21) réalisée dans le premier partenaire d'embrayage (2), dans lequel le manchon coulissant (4) est couplé en mouvement à la bague de commande (16) par l'intermédiaire de la barre de commande (20).

5. Ensemble embrayage (1) selon la revendication 4, **caractérisé en ce que** le manchon coulissant (4) présente au moins un contour de commande (22) sur sa circonférence interne, qui est supporté dans la direction axiale (101) sur la barre de commande (20) afin de transporter la bague de commande (16) contre la force de ressort lors d'un mouvement du manchon coulissant (4) dans la direction axiale (101) au moins de la position de roue libre (106) à la position neutre (107).

6. Ensemble embrayage (1) selon l'une des revendications précédentes, **caractérisé par** une bague de sécurisation (23), dans lequel le premier partenaire d'embrayage (2) présente une rainure de réception circonférentielle (24) et le manchon coulissant (4) présente une rainure de retenue circonférentielle (25), dans lequel la bague de sécurisation (23) est montée dans la rainure de réception (24) et, dans la position neutre (107) du manchon coulissant (4), vient en prise par sections dans la rainure de retenue (25) pour sécuriser le manchon coulissant (4) axialement au premier partenaire d'embrayage (2) dans la position neutre.

7. Ensemble embrayage (1) selon la revendication 6, **caractérisé en ce que** la rainure de retenue (25) et/ou la bague de sécurisation (23) présentent un chanfrein dé départ (26), dans lequel la bague de sécurisation (23) est déformée radialement dans la rainure de réception (24) par l'intermédiaire du chanfrein dé départ (26) lors d'un déplacement axial du manchon coulissant (4) de la position neutre (107) à la position de roue libre (106), de sorte que le manchon coulissant (4) peut être déplacé librement en direction de la position neutre (107) et de la position de blocage (105).

8. Ensemble embrayage (1) selon la revendication 6 ou 7, respectivement en liaison avec la revendication 3, **caractérisé en ce que** la bague de sécurisation (23) définit une butée d'extrémité pour la bague de commande (16) dans une direction axiale opposée (102) lorsque le manchon coulissant (4) est agencé dans la position de roue libre (106) et/ou dans la position de blocage (105).

9. Ensemble embrayage (1) selon l'une des revendications précédentes, **caractérisé en ce que** le premier partenaire d'embrayage (2) présente une denture externe (5) et le second partenaire d'embrayage (3) présente une denture de blocage (7), dans lequel le manchon coulissant (4) est en prise avec la denture externe (5) de manière solidaire en rotation par l'intermédiaire d'une denture interne (6) et, lors d'un déplacement dans la position de blocage (105), peut en outre être mis en prise de manière solidaire en rotation avec la denture de blocage (7) par l'intermédiaire de la denture interne (6), afin de coupler les deux partenaires d'embrayage (2, 3) l'un à l'autre de manière solidaire en rotation.

10. Chaîne cinématique comportant un premier et un second arbre, comportant l'ensemble embrayage (1) selon l'une des revendications précédentes, **caractérisée en ce que** le premier arbre est relié de manière solidaire en rotation au premier partenaire d'embrayage (2) et le second arbre est relié de manière solidaire en rotation au second partenaire d'embrayage (3), dans laquelle une transmission de couple entre les deux arbres peut être commandée par un déplacement axial d'un manchon coulissant (4) de l'ensemble embrayage (1).
